# EUROPEAN PATENT APPLICATION

(11) **EP 2 022 764 A1**
(43) Date of publication of application: **11.02.2009**
(21) Application number: 07743262.3
(22) Date of filing: 14.05.2007
(51) Int. Cl.: C03B 17/06, C03B 13/04, C03B 13/16

(54) **METHOD AND APPARATUS FOR MANUFACTURING PLATE GLASS BY ROLL FORMING, AND PLATE GLASS PRODUCT**

(30) Priority: 16.05.2006 JP 2006136200
(71) Applicant: National Institute of Advanced Industrial Science and Technology, Tokyo 100-8921 (JP)
(72) Inventor: KOJIMA, Gen, Tsukuba-shi Ibaraki 305-8568 (JP); YOKOYAMA, Hiroshi, Tsukuba-shi Ibaraki 305-8568 (JP)
(74) Representative: Hall, Matthew Benjamin
(86) International application number: PCT/JP2007/059827
(87) International publication number: WO 2007/132797

(57) **Abstract**

High quality plate glass free from surface defects, and excellent in macro thickness uniformity, flatness, and the like is manufactured by minimizing the part to be wasted. To that end, glass melt 4 from a melting furnace 1 is supplied between a gas ejection / discharge rotary roll 5 and a gas ejection / discharge concave support 6. The gas ejection / discharge rotary roll 5 has a large number of gas ejection holes each including a flow path having fluid resistance (e.g., vortex flow resistance) in the inside for supplying compression air, and a large number of gas decompression discharge holes each including the same flow path. The gas ejection / discharge concave support 6 has a large number of gas ejection holes for supplying compression air, each including the same flow path, and gas ordinary pressure discharge holes each communicated with the ordinary pressure release space. The glass melt 4 introduced between the roll surface and the concave body surface does not come in contact with the roll and the concave body, and moves in conjunction with the roll by the suspension adsorption holding force resulting from the dynamic pressure equilibrium of a gas. Thus, the glass melt 4 is appropriately applied with a stress parallel with or vertical to the direction of plane of glass to be formed. Thus, prescribed plate glass is formed by a first roll 13 and a second roll 14.

## Description

### Technical Field

The present invention relates to a manufacturing method and a manufacturing apparatus of plate-like glass showing a high quality nano-level surface smoothness, and a product as plate glass manufactured by the manufacturing method.

### Background Art

Plate-like glass for construction or for a vehicle is, in advanced countries, mostly produced by a tin-float method in which glass in a molten state is caused to flow onto a tin bath to be gradually formed into a flat plate.

When the thin plate high smoothness for a display is required, a so-called fusion method is often used in which molten glass is caused to overflow from both sides of a conduit of platinum, and is allowed to fall along the guide of platinum, and then, the glass flows from the both sides are merged into one sheet.

Whereas, in the case of wire glass or the like, in order to sandwich a wire of stainless steel or the like therebetween, laminate forming is performed while applying a pressure thereto by means of metal rolls.

In forming of plate glass with a tin float method, forming is performed in a high-temperature tin bath. Therefore, the interior of the closed space is required to be kept under a reducing atmosphere such as hydrogen in order to prevent oxidation of tin. This entails problems of the cost and the safety measure of hydrogen or the like. Further, contact with tin causes the tin to enter into glass, and oxygen which has entered the tin bath space and tin react with each other, resulting in tin oxide. These and other factors cause the surface defects of the resulting product, which particularly becomes a problem in display use requiring high quality. Further, in order to keep tin at high temperatures, a large energy cost is entailed in particularly small scale production. The effects on the environmental problems of carbon dioxide gas emission and the like are also not negligible.

Whereas, in the case of the tin float method, high-temperature glass comes in direct contact with metal tin having high thermal conductivity. Therefore, the heat flow rate between glass and metal tin is large, so that glass directly and largely receives the effect of the temperature of tin. Accordingly, the temperature control of tin becomes a very important technical problem. Further, in forming under such contact heat transfer, the local excessive deformed portion of glass is kept isothermal with the surroundings by supply of heat from tin. Therefore, there is a large fear that the abnormal deformation further proceeds. In order to avoid this, forming is required to be slowly carried out in a quasi equilibrium manner while implementing equalization / uniformalization using the viscosity flow of glass due to the surface tension and the gravity, and while achieving detailed temperature control.

The surface of the product by the fusion method comes in contact with only air during the manufacturing process. Therefore, there is no fear of the surface defects as described above. However, glass is formed in such a manner as to be drawn down vertically. Therefore, as with other down draw, the glass at the tip portion of the platinum guide is applied with the maximum load. Accordingly, the temperature control of glass for relieving it becomes complicated. Further, the method is not suitable for the production of thick-walled products. Still further, the conduit made of platinum is required to be replaced for each change of the type such as width or thickness of the product. Thus, so-called job change takes a long time, and the cost of the lip made of expensive platinum is also not negligible.

With roll forming by a metal roll, the phenomenon that marks of the contact with the metal roll remain wrinkles or an uneven form is difficult to be avoided. Thus, the quality of the product is not fit for use as flat plate glass.

In recent years, the following method different from the existing methods described above has been developed. A porous support is impregnated with a medium such as water. Molten glass is caused to outflow thereon, thereby to continuously manufacture plate-like glass. It is indicated that this method may improve or resolve the defects of the existing methods as described above (JP-A-09-295819). Whereas, as part thereof, there is proposed a method in which water is impregnated in roll-like base materials, and molten glass is caused to overflow between a pair of the facing rolls to be formed into plate-like glass (JP-A-2001-180949). However, with this method, it is difficult for molten glass to be bit into the gap formed by a pair of the rolls. Therefore, the method is very difficult to carry out. Further, with the improved method thereof (JP-A-2002-47019), there is proposed an attempt to facilitate the bite of molten glass. However, even with this method, the bite on the tangent to a pair of the rolls cannot be necessarily facilitated. Further, when a higher priority is given to bite, the direct contact of the glass surface with the rolls increases, and hence the risk of the occurrence of defects in the surface shape increases.

Further, with other methods than the foregoing roll forming, on opposite end portions along the direction of width of a precious glass product, a gear-like jig is put from the necessity of drawing or the like. Accordingly, portions of deformation and abnormal wall thickness which cannot be used as a product are formed at the opposite ends. This causes thermal distortion during slow cooling, which becomes one cause of reduction of the yield. Further, with known roll forming, the occurrence of the useless portions at the opposite ends can be prevented. However, the smooth surface state is difficult to obtain due to the interaction of the roll surface and glass. Thus, the method cannot be applied to production of high quality plate glass at all.
Patent Document 1: JP-A-9-295819
Patent Document 2: JP-A-2001-180949
Patent Document 3: JP-A-2002-47019

### Disclosure of the Invention

### Problems to be Solved by the Invention

It is an object of the present invention to provide an ultimate technology of plate glass which resolves or improves the defects, restrictions, and the like of conventionally known technologies such as the down draw methods typified by the tin bath method and the fusion method, a metal roll rolling method, and a method in which a base material is impregnated with water (aqua float method), and minimizing the portion to be wasted of a high quality plate-like glass with no surface defect, and manufacturing high quality plate glass excellent in macro thickness uniformity, flatness, and the like. Further, in addition, it is an object thereof to provide a manufacturing method of plate glass which is easy and is capable of largely reducing the energy, resource, and environmental problems.

### Means for Solving the Problems

As described above, with a roll out method using water vapor as the method for preventing the direct contact and the interaction between glass and the roll base materials, which are defects of a conventionally known roll forming method, there is encountered a problem which is not only actually difficult but also theoretically very difficult due to the phenomenon of slip or the like. In view of this, the present inventors have studied various new methods to overcome these defects. As a result, they found out the following: when holding the glass in a molten state by a gas, it is possible to wrap glass in a molten state around the roll in a non-contact manner with the base materials by using the dynamic pressure equilibrium between a gas being compression ejected and a gas being decompression discharged. This has led to the present invention which enables forming by applying a tensile stress in the direction of plane of glass or/or a compression stress vertically to the direction of plane of glass.

Namely, as the first of the technical elements forming the essence of the present invention, glass in a molten state is allowed to float and be adsorbed on a gas in equilibrium between dynamically given compression and decompression.

When glass is in a molten state, glass melt is sucked by the base material which decompression discharges a gas. Therefore, the bite state using this is implemented.

On the other hand, when glass is in a relatively static relation with the base material for ejecting and decompression discharging a gas, the low viscosity glass on the decompression discharged gas is forcedly subjected to deformation. Therefore, as the second of the technical elements forming the essence of the invention, glass is put in a dynamic pressure equilibrium state in this sense.

To that end, it is important and necessary that both are invariably in a relatively sliding state. However, in addition, it is also not preferable that the parts for compression ejecting a gas and the parts for decompression discharging a gas face a given part of glass repeatedly and regularly. Being dynamic is also desired in such a sense.

As shown up to this point, the dynamic pressure equilibrium of a gas means the equilibrium of compression / decompression of a gas in a flowing state to be compression ejected from a given part of the base material and be decompression discharged from another given part, or changing in the positional relationship of the compression ejection part and the decompression discharge part with respect to glass. Further, it means that the change in positional relation is also repeated, and is not fixed.

Whereas, in order to implement the processing continuously by putting glass in states different in conditions successively, the following method is required: the adsorbed state is appropriately released from the suspended and adsorbed state, which facilitates release of the glass melt from the base material. Also as a method for achieving this, the dynamic gas pressure control is an effective concept. Specifically, it is important to impart a mechanism in which a gas is decompression discharged from a given region of the base material continuously, and at the instant at which glass goes beyond the region, the decompression is released.

On the other hand, it is also important and necessary that the glass melt in a suspended and adsorbed state is formed into flat plate glass continuously, and the plate thickness is reduced, or the plate thickness is controlled. For this reason, it is necessary that a tensile stress is applied to glass in parallel to the direction of the surface thereof, or a compression stress is applied to glass vertically to the direction of the surface thereof. Alternatively, it is necessary that both the stresses are applied thereto.

To promote this, and to achieve the prescribed suspended adsorbed state and control of the wall thickness of glass is difficult with line contact as with a simple conventionally known roll out. It is important and effective that at least one side of the glass surfaces undergoes the surface holding of the base material under the dynamic pressure equilibrium of a gas. This is the third of the technical elements forming the essence of the invention.

For this reason, it is important and necessary that one of the base materials for carrying out ejection and decompression discharge of a gas is in the form of a rotary roll, and that the opposing base material is in the form of a roll, a flat plate, or a concave surface along the surface.

Further, at that time, it is also effective that the glass melt is applied with a tension in the direction of flow of the glass ribbon from downstream. In order to guarantee the uniform thickness along the direction of width of glass at that time, gap adjustment in the direction of width of the opposite sides of the opposing base material, and the like are also effective.

As conceivable various potential gases as the gases for implementing such a technology, air or water vapor are effective and preferable from various viewpoints of ease of availability thereof, ease of handling, cost, safety, and other viewpoints.

Further, in order to gradually implement forming and solidification of glass while performing prescribed removal of heat from high-temperature glass, it is naturally understood that various studies and optimization of the materials to be used and the operation conditions from the viewpoint of thermal engineering are demanded.

For example, as the types, from the viewpoints of a given heat resistance, dimensional stability, chemical stability, and the like, carbon, iron, other metals, ceramics, and the like are applicable. They should be adopted after examination from the viewpoints of the emissivity of the surface, heat transfer effects of the inside, and the like.

As for the foregoing present invention, more specifically, the following method is adopted. Namely, a method for manufacturing plate glass of the invention is characterized by including: forming glass, the glass to be subjected to forming being at a glass transition temperature or higher at which the viscosity is 10³ poises or more and 10⁶ poises or less, at least one side of the glass facing a base material for letting out and taking in a gas, the glass being held in a dynamic pressure equilibrium state of both of a gas being compression ejected and a gas being decompression discharged to outside the system, and a tensile stress in the direction parallel with the surface of glass and/or a compression stress in the direction vertical to the surface of glass, being applied thereto.

Further, another plate glass manufacturing method in accordance with the invention is characterized in that the gas to be discharged is in two modes of ordinary pressure and reduced pressure states in the plate glass manufacturing method.

Still further, a still other plate glass manufacturing method in accordance with the invention is characterized in that both sides of the glass to be subjected to forming are put in a gas environment in the plate glass manufacturing method.

Furthermore, a still more other plate glass manufacturing method in accordance with the invention is characterized in that at least a part of the base material for letting out and taking in the gas is a rotary roll or in the shape of a roll in the plate glass manufacturing method.

Whereas, a furthermore other plate glass manufacturing method in accordance with the invention is characterized by using a roll in which a given area of the base material holds the glass in a flowing state of the gas being compression ejected and the gas being decompression sucked to outside the system, and the other area is in the flowing state of the gas being compression ejected and the gas being discharged to outside the system under ordinary pressure in the plate glass manufacturing method.

Further, another plate glass manufacturing method in accordance with the invention is characterized by using a roll in which a given area of the base material holds the glass in a dynamic pressure equilibrium state of the gas being compression ejected and the gas being decompression sucked to outside the system, and the other area expresses the dynamic pressure equilibrium state of the gas being compression ejected and the gas being discharged to outside the system under ordinary pressure in the plate glass manufacturing method.

Still further, a still other plate glass manufacturing method in accordance with the invention is characterized in that the gas contains air or water vapor as a main component in the plate glass manufacturing method.

Furthermore, a still more other plate glass manufacturing method in accordance with the invention is characterized in that the base material moves at a different speed from the moving speed of the glass to be subjected to forming in the plate glass manufacturing method.

Whereas, a furthermore plate glass manufacturing method in accordance with the invention is characterized in that the gas is ejected and discharged through small holes with an average diameter of 5 mm or less, substantially uniformly distributed on the base material in the plate glass manufacturing method.

Further, another plate glass manufacturing method in accordance with the invention is characterized in that the base material for letting out and taking in the gas is in the shape of a bed, and a force for expanding the opposite sides of the moving glass outwardly is applied by rotations of gas ejection / decompression discharge rolls extending in the direction of movement of glass on opposite sides of the bed in the plate glass manufacturing method.

Whereas, a plate glass manufacturing apparatus in accordance with the invention is characterized by including: forming glass, the glass to be subjected to forming being at a glass transition temperature or higher at which the viscosity is 10³ poises or more and 10⁶ poises or less, at least one side of the glass facing a base material for letting out and taking in a gas, the glass being held in a dynamic pressure equilibrium state of both of a gas being compression ejected and a gas being decompression discharged to outside the system, and a tensile stress in the direction parallel with the surface of glass and/or a compression stress in the direction vertical to the surface of glass, being applied thereto.

Further, another plate glass manufacturing apparatus in accordance with the invention is characterized in that the gas to be discharged is in two modes of ordinary pressure and reduced pressure states in the plate glass manufacturing apparatus.

Still further, a still other plate glass manufacturing apparatus in accordance with the invention is characterized in that both sides of the glass to be subjected to forming are put in a gas environment in the plate glass manufacturing apparatus.

Furthermore, a still more other plate glass manufacturing apparatus in accordance with the invention is characterized in that at least a part of the base material for letting out and taking in the gas is a rotary roll or in the shape of a roll in the plate glass manufacturing apparatus.

Whereas, another plate glass manufacturing apparatus in accordance with the invention is characterized in that at least one side of the glass surfaces undergoes surface holding of the base material under the dynamic pressure equilibrium of the gas in the plate glass manufacturing apparatus.

Further, a still other plate glass manufacturing apparatus in accordance with the invention is characterized by using a roll in which a given area of the base material holds the glass in a dynamic pressure equilibrium state of the gas being compression ejected and the gas being decompression sucked to outside the system, and the other area expresses the dynamic pressure equilibrium state of the gas being compression ejected and the gas being discharged to outside the system under ordinary pressure in the plate glass manufacturing apparatus.

Still further, a still more other plate glass manufacturing apparatus in accordance with the invention is characterized in that the gas contains air or water vapor as a main component in the plate glass manufacturing apparatus.

Furthermore, a furthermore other plate glass manufacturing apparatus in accordance with the invention is characterized in that the base material moves at a different speed from the moving speed of the glass to be subjected to forming in the plate glass manufacturing apparatus.

Whereas, another plate glass manufacturing apparatus in accordance with the invention is characterized in that the gas is ejected and discharged through small holes with an average diameter of 5 mm or less, substantially uniformly dispersed on the base material in the plate glass manufacturing apparatus.

Further, another plate glass manufacturing apparatus in accordance with the invention is characterized in that the base material for letting out and taking in the gas is in the shape of a bed, and a force for expanding the opposite sides of the moving glass outwardly is applied by rotations of gas ejection / decompression rolls extending in the direction of movement of glass on opposite sides of the bed in the plate glass manufacturing apparatus.

Whereas, a product of plate glass in accordance with the invention is a product manufactured by any of the plate glass manufacturing methods.

### Advantage of the Invention

In accordance with the present invention, there can be obtained plate glass which has smoothness on the opposite sides in a burnt state, is clean and is free from defects, and has high-degree uniformity and smoothness over the entire full width of the product by a small scale apparatus. Particularly, the deformed defective parts formed on the opposite sides in the direction of width with a conventional method are minimized. Further, it is possible to produce plate glass without making heavy use of energy and resources.

### Brief Description of Drawings

[FIG. 1] A view showing the entire outline of a dynamic gas pressure control roll forming method in an example of the present invention;

[FIG. 2] An enlarged cross sectional view of a roll and a concave body part of the same example;

[FIG. 3] A dynamic gas pressure control bed forming entire schematic view in another example of the invention; and

[FIG. 4] A dynamic gas pressure control bed forming partial schematic view.

### Explanations of Reference Numerals

1 Melting furnace
2 Toe-heel
3 Melt supply lip
4 Glass melt
5 Gas ejection / discharge rotary roll
6 Gas ejection / discharge concave body support
7 Decompression cell
8 Compression cell
9 diaphragm
10 Sliding seal
11 Gas thin layer between gas ejection / discharge rotary roll and glass ribbon
12 Gas thin layer between gas ejection / discharge concave body support and glass ribbon
13 First roll
14 second roll
15 Formed plate glass
16 Slow cooling zone equipment

### Best Mode for Carrying Out the Invention

It is an object of the present invention to provide an ultimate technology of plate glass which minimizes the part to be wasted of high quality plate-like glass free from surface defects, and manufacturing high quality plate glass excellent in micro smoothness and macro thickness uniformity, flatness, and the like. The object was implemented by a method for manufacturing plate glass, which includes: forming glass, the glass to be subjected to forming being at a glass transition temperature or higher at which the viscosity is 10³ poises or more and 10⁶ poises or less, at least one side of the glass facing a base material for letting out and taking in a gas, the glass being held in a dynamic pressure equilibrium state of both of a gas being compression ejected and a gas being decompression discharged to outside the system, and a tensile stress in the direction parallel with the surface of glass and/or a compression stress in the direction vertical to the surface of glass, being applied thereto.

### Example 1

Below, desirable embodiments will be described by reference to the accompanying drawings.

In accordance with the present invention, a roll forming method of plate glass is characterized in that a raw material at a glass transition temperature or higher at which the state of glass to be subjected to forming has a viscosity of 10³ poises or more and 10⁶ poises or less is used, and is formed with at least one side of the glass facing a base material for letting out and taking in a gas, while being held in a dynamic pressure equilibrium state of both of a gas being compression ejected and a gas being decompression discharged to outside the system. However, for example, JP-T-2003-507681 (the term "JP-T" as used herein means a published Japanese translation of a PCT patent application), and JP-T-2003-509227 disclose technologies of holding a solid-like object at a prescribed position while rendering the object in a suspended state by the dynamic pressure equilibrium state of both of a gas being compression ejected and a gas being decompression discharged to outside the system.

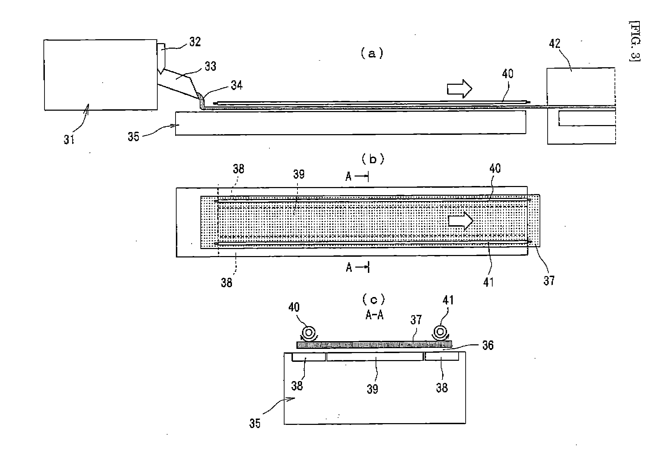

In the invention, such a technology is used. Therefore, first, this technology will be simply described. For example, the technology disclosed in JP-T-2003-507681 is as follows. As shown in FIG. 3A, fins 44 and 45 are provided in a protruding manner alternately from the right and left in the view to the center of a tube 41 in a zigzag manner in the tube 41. Through the tube, a high pressure air is caused to flow from an inlet 42 at the lower part in the figure. Then, vortexes 46 as shown occur between respective fins. The air main flow flowing between the vortexes is ejected from an ejection port 43. The tube 41 with such a structure is connected to a duct 51 as shown in the same view B, so that a high pressure air is supplied from a high pressure reservoir 52 through a supply tube 53, and is ejected from the ejection port 43. As a result, the high pressure air pushes up an object 55 put in such a manner as to close the ejection port 43.

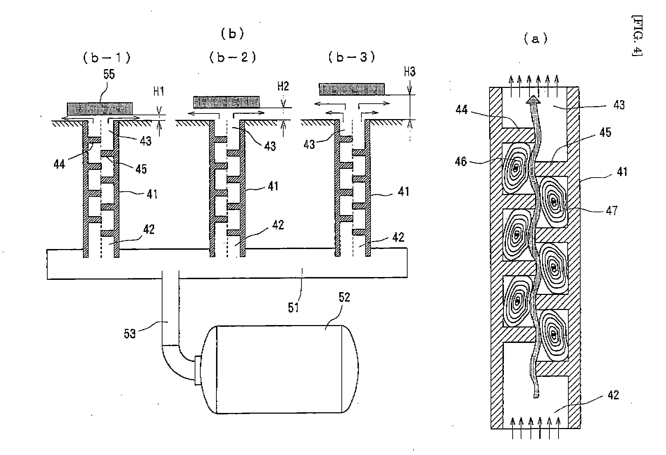

The equilibrium of the weight of the object 55 and the ejection pressure or the like of the fluid from the ejection port 43 at this step, results in a prescribed height separated from the opening of the ejection port 43. Namely, for example, in FIG. 4B, when the equilibrium is achieved at a height H2 as shown in FIG. 4B-2, and the object 55 is at a height H1 which is lower than that as shown in FIG. 4B-2, the object 55 is pushed up to the position at the height H2 in FIG. 4B-2. Whereas, when the object 55 is at the position at the height H3 which is higher than that as in FIG. 4B-3, the object 55 moves down to the position at the height H2 of FIG. 4B-2, and is stabilized. Further, by the stable air flow around the object at this step, the object 55 has a characteristic of trying to remain at that position. For this reason, with such an apparatus, the object 55 on the ejection port 43 is held while being suspended at a prescribed height from the opening, and at a prescribed position. Further, when the similar tube 41 communicating with the outside under ordinary pressure is disposed adjacent to such an ejection port 43, the ejection air flow and an air flow discharging this are stabilized, which enables the object to be held at a prescribed position with more reliability.

The characteristic of holding an object as described above is achieved, other than by ejecting air to the surface on which the object is mounted in the following manner. As shown in JP-T-2003-509227 described above, a decompression discharging hole having the same characteristic is also provided for reversely sucking the object by a vacuum pump. This enables the object to be rendered in a simultaneously suspended and adsorbed state. Further, the holding characteristic of the object from the substrate surface is further improved.

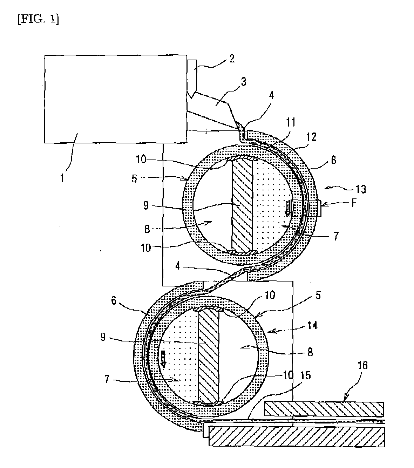

The present inventors found out the following: when the foregoing known technology is used for manufacturing of glass, remarkable effects not obtainable with conventional various glass manufacturing methods as described above are produced. This has led to the present invention. Particularly, simply when the technologies of the cited patents are applied to glass in a molten state as they are, the glass having fluidity cannot be obtained as a smooth / flat product. Thus, the inventors found out the importance of glass and the base material for ejecting / discharging a gas being in a dynamic relation, and completed the invention. In a first embodiment of the invention, as shown in FIG. 1, glass molten in a melting furnace 1 is adjusted in flow rate at a toe heel 2, passes through a lip 3 for supply, and is supplied to a forming machine as glass melt 4. At this step, the glass ribbon is desirably supplied in the shape generally close to the forming design plate glass width in such a sense as to avoid the internal stress and potential distortion not desirable for glass. The temperature of the glass ribbon to be supplied varies according to the composition of glass. However, the temperature is the temperature showing generally 10² to 10⁵ poises, and preferably 10³ to 10⁴ poises. In the case of soda lime glass, the temperature is preferably about 1000 to 1100 °C.

The glass ribbon which has fallen on the gas ejection / discharging rotary roll 5 is immediately suspended / adsorbed on a gas thin layer 11 on the base material by the dynamic gas pressure equilibrium formed by the ejected gas and the decompression discharged gas occurring on the surface of the roll base material, and moves in a sliding manner according to the rotation of the roll.

The degree of sliding movement at that time can be controlled by the conditions such as viscosity and temperature of glass, pressure, flow rate, and the ratio of ejection and decompression discharging of the gas, and the like. The quantity control according to the purpose is preferred.

The glass ribbon sliding and moving while being suspended / being adsorbed on the gas ejection / discharge rotary roll 5 receives pressure from the top surface toward the rotary roll surface via a gas 12 by a gas ejection / discharge concave body 6. At this step, a design of giving a smooth curved surface on each surface of the roll and the concave body so that a stress in the direction of width acts on the glass ribbon, or other designs are also possible and useful.

Further, the material of the roll is required to withstand the temperature of glass to be handled. Thus, a heat resistant steel, ceramics, carbon, or the like can be preferably used. In that case, it is important and effective from the viewpoint of the temperature control of glass that the temperature and amount of the gas being ejected, the thermal conductivity of the roll base material, the emissivity of the surface, and the like are appropriately selected.

The glass ribbon slides and moves in an air-sandwiched manner between the rotary roll and the concave body. Upon approximately half turn, the glass ribbon leaves a first roll 13, and moves to a second roll 14 set if required.

For discharge from the decompression discharge holes of the rotary roll, a decompression cell 7 and an ordinary pressure cell 8 are incorporated inside the roll so that invariably, approximately the half thereof is under reduced pressure and the remaining half is under ordinary pressure. They are configured such that invariably, reduced pressure acts on the half of the roll surface, and ordinary pressure acts on the remaining half by a diaphragm 9 and a sliding seal 10. The structure and mechanism of each cell can be appropriately designed and manufactured from the aspects of the objective forming and performance of the apparatus, ease of manufacturing, and the cost, which is preferable. (described in details later)

The glass ribbon is, during this period, gradually subjected to reduction in thickness by a tensile stress from downstream. At that step, the suspended / adsorbed state functions also in order to prevent shrinkage in the direction of width of the glass ribbon. Further, in order to optimize the function, a difference in degree of pressure reduction can be usefully caused in the direction of width. The plate glass 15 subjected to forming and reduction in thickness through the steps up to this point passes through a prescribed slow cooling zone 16, resulting in a product.

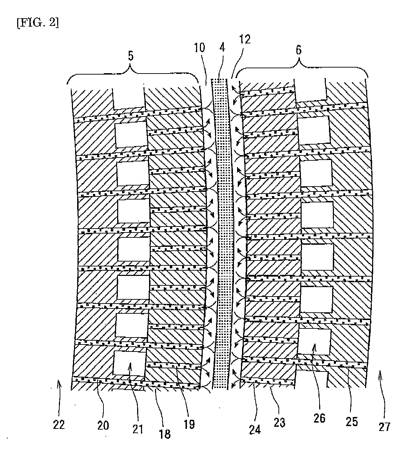

FIG. 2 is an enlarged cross sectional view of a F part of FIG. 1, and illustrates the mechanism of the dynamic gas pressure control. In the same figure, between the gas ejection / discharge rotary roll 5 and the gas ejection / discharge concave body 6, the glass ribbon 4 moves with the rotation of the gas ejection / discharge roll 5. Communication is established between a rotary roll gas decompression chamber 8 on the central part side of the gas ejection / discharge rotary roll 5 and the roll surface 28 via a rotary roll gas decompression discharge hole 6 disposed in the gas ejection / discharge rotary roll base material 18. Further, in the gas ejection / discharge rotary roll base material 18, a rotary roll gas compression cell 21 is provided, and communication is established between the rotary roll gas compression cell 21 and the roll surface 28 via a rotary roll gas ejection hole 19. The rotary roll gas decompression discharge hole 6 and the rotary roll gas ejection hole 19 have the same configuration as with the tube 41 of FIG. 4. A large number of fins are arranged in a zigzag form therein. As a result, a compression air from the rotary roll gas compression cell 21 is ejected from the roll surface 28 through the rotary roll gas ejection hole 19, and discharged from the adjacent rotary roll gas decompression discharge hole 20 into the rotary roll gas decompression chamber 22.

As for the gas ejection / discharge concave body 6, communication is established between the ordinary pressure release space 27 on the outside and the concave body surface 29 via a concave body gas ordinary pressure hole 25 provided in the gas ejection / discharge concave body base material 23. In the gas ejection / discharge concave body base material 23, a concave body gas compression cell 26 is provided. Communication is established between the concave body gas compression cell 26 and the concave body surface 29 through a concave body gas ejection hole 24. As a result, the compression air from the concave body gas compression cell 26 is ejected from the concave body surface 29 by the concave body gas ejection hole 24, and discharged from the adjacent concave body gas ordinary pressure hole 25 into the ordinary pressure release space 27. As a result, the glass ribbon 4 sucked to the roll surface 28 is strongly held by decompression discharge while forming the gas thin layer 11 separated from the roll surface 28. Further, the glass ribbon 4 is held while forming a gas thin 12 layer also separated from the concave body surface 29. Therefore, it is possible to effect an action of feeding out the glass ribbon in the gas thin layer with the rotation of the roll as a whole.

### Example 2

The invention is also further applicable the bed forming method of glass as in FIG. 3. In the example shown in FIG. 3, a glass melt ribbon 34 is poured from a melting furnace 31 into a gas ejection / discharge bed 35 while being controlled in flow rate by a toe heel 32, and is transported to the direction of an arrow. The surface side of the gas ejection / discharge bed 35 is configured such that, as shown in FIG. 3C, the central part is a gas ejection / ordinary pressure discharge part 39, and gas ejection / decompression discharge parts 38 are on the opposite sides thereof. Further, above each gas ejection / decompression part, a gas ejection / decompression discharge roll 4 extending in the direction of transport of glass is disposed. The gas ejection / decompression discharge roll 4 is rotated in the direction to elongate the opposite sides of the glass melt ribbon sideways above the opposite sides of the glass melt ribbon 34 being transported thereunder.

As a result, when the glass melt ribbon 34 which has fallen from the melt supply lip 33 is transported on the gas ejection / discharge bed 35, it is rendered in a suspended state at the central part by the gas ejection / ordinary pressure discharge part 39. In addition, at the opposite side parts of the glass melt ribbon 34, the glass melt ribbon 34 is held in the suspended state by the gas ejection / decompression discharge parts 38. Thus, the glass melt ribbon 34 is applied with a force in the outwardly expanding direction with a gas thin layer interposed between it and the gas ejection / decompression discharge rolls 40 and 41 at the parts by the rolls. As a result, the glass melt ribbon 34 is transported with an even thickness on the gas ejection / discharge bed 35, and is fed to a slow cooling zone 42. This prevents the opposite sides of the glass melt ribbon 34 from coming in contact with the members such as contact rolls as with a conventional bed forming. This can eliminate the waste of the opposite width parts without causing damage parts on the opposite sides, and can form flat plate glass with a uniform thickness over the entire surface.

As described above, in the invention, the opposite sides of glass at a temperature equal to or higher than the glass temperature, to be subjected to forming, can be held between gases carrying out compression ejection and decompression suck from uniformly dispersed micro holes, thereby to be formed into plate-like glass. Whereas, the conventional methods of pouring glass onto molten tin, or vertically pulling down glass from a special conduit and guide made of platinum require very large size or expensive apparatuses, and also complicated operations. In contrast, in the invention, it is possible to form plate glass with high quality by means of a small size and low-cost apparatuses. Whereas, an aqua float method using water has been proposed conventionally. However, in the invention, it is possible to produce the same effects as with the aqua float method by using common air; and the following various effects are produced: it is possible to attain the uniform thickness and flatness without requiring stretching along the direction of width; and waste of both width parts is also eliminated.

Incidentally, the present invention is not limited nor restricted to the foregoing examples. It is naturally understood that the technology satisfying the basic requirements is within the scope of the present invention. For example, as an ejection method of a gas, there are usefully available evaporation of a liquid such as water impregnated in a porous base material and ejection / discharge of a gas using the fluid resistance upon passing through a porous member with a micro pore diameter, or a curved tube.

## Claims

1. A method for manufacturing plate glass, **characterized by** including: forming glass, the glass to be subjected to forming being at a glass transition temperature or higher at which the viscosity is 10³ poises or more and 10⁶ poises or less, at least one side of the glass facing a base material for letting out and taking in a gas, the glass being held in a dynamic pressure equilibrium state of both of a gas being compression ejected and a gas being decompression discharged to outside the system, and a tensile stress in the direction parallel with the surface of glass and/or a compression stress in the direction vertical to the surface of glass, being applied thereto.

2. The method for manufacturing plate glass according to claim 1, **characterized in that** the gas to be discharged is in two modes of ordinary pressure and reduced pressure states.

3. The method for manufacturing plate glass according to claim 1 or 2, **characterized in that** both sides of the glass to be subjected to forming are put in a gas environment.

4. The method for manufacturing plate glass according to any of claims 1 to 3, **characterized in that** at least a part of the base material for letting out and taking in the gas is a rotary roll or in the shape of a roll.

5. The method for manufacturing plate glass according to any of claims 1 to 4, **characterized in that** at least one side of the glass surfaces undergoes surface holding of the base material under the dynamic pressure equilibrium of the gas.

6. The method for manufacturing plate glass according to any of claims 1 to 5, **characterized by** using a roll in which a given area of the base material holds the glass in a dynamic pressure equilibrium state of the gas being compression ejected and the gas being decompression sucked to outside the system, and the other area expresses the dynamic pressure equilibrium state of the gas being compression ejected and the gas being discharged to outside the system under ordinary pressure.

7. The method for manufacturing plate glass according to any of claims 1 to 6, **characterized in that** the gas contains air or water vapor as a main component.

8. The method for manufacturing plate glass according to any of claims 1 to 7, **characterized in that** the base material moves at a different speed from the moving speed of the glass to be subjected to forming.

9. The method for manufacturing plate glass according to any of claims 1 to 8, **characterized in that** the gas is ejected and discharged through small holes with an average diameter of 5 mm or less, substantially uniformly distributed on the base material.

10. The method for manufacturing plate glass according to claim 1, **characterized in that** the base material for letting out and taking in the gas is in the shape of a bed, and a force for expanding the opposite sides of the moving glass outwardly is applied by rotations of gas ejection / decompression discharge rolls extending in the direction of movement of glass on opposite sides of the bed.

11. An apparatus for manufacturing plate glass, **characterized by** including: forming glass, the glass to be subjected to forming being at a glass transition temperature or higher at which the viscosity is 10³ poises or more and 10⁶ poises or less, at least one side of the glass facing a base material for letting out and taking in a gas, the glass being held in a dynamic pressure equilibrium state of both of a gas being compression ejected and a gas being decompression discharged to outside the system, and a tensile stress in the direction parallel with the surface of glass and/or a compression stress in the direction vertical to the surface of glass, being applied thereto.

12. The apparatus for manufacturing plate glass according to claim 11, **characterized in that** the gas to be discharged is in two modes of ordinary pressure and reduced pressure states.

13. The apparatus for manufacturing plate glass according to claim 11 or 12, **characterized in that** both sides of the glass to be subjected to forming are put in a gas environment.

14. The apparatus for manufacturing plate glass according to any of claims 11 to 13, **characterized in that** at least a part of the base material for letting out and taking in the gas is a rotary roll or in the shape of a roll.

15. The apparatus for manufacturing plate glass according to any of claims 11 to 14, **characterized in that** at least one side of the glass surfaces undergoes surface holding of the base material under the dynamic pressure equilibrium of the gas.

16. The apparatus for manufacturing plate glass according to any of claims 11 to 15, **characterized by** using a roll in which a given area of the base material holds the glass in a dynamic pressure equilibrium state of the gas being compression ejected and the gas being decompression sucked to outside the system, and the other area expresses the dynamic pressure equilibrium state of the gas being compression ejected and the gas being discharged to outside the system under ordinary pressure.

17. The apparatus for manufacturing plate glass according to any of claims 11 to 16, **characterized in that** the gas contains air or water vapor as a main component.

18. The apparatus for manufacturing plate glass according to any of claims 11 to 17, **characterized in that** the base material moves at a different speed from the moving speed of the glass to be subjected to forming.

19. The apparatus for manufacturing plate glass according to any of claims 11 to 17, **characterized in that** the gas is ejected and discharged through small holes with an average diameter of 5 mm or less, substantially uniformly distributed on the base material.

20. The method for manufacturing plate glass according to claim 11, **characterized in that** the base material for letting out and taking in the gas is in the shape of a bed, and a force for expanding the opposite sides of the moving glass outwardly is applied by rotations of gas ejection / decompression rolls extending in the direction of movement of glass on opposite sides of the bed.

21. A product manufactured by the method for manufacturing plate glass according to any of claims 1 to 10.
